(19) **Europäisches Patentamt / European Patent Office / Office européen des brevets**

(11) **EP 2 224 033 B1**

(12) **EUROPEAN PATENT SPECIFICATION**

(45) Date of publication and mention
of the grant of the patent:
**08.02.2017 Bulletin 2017/06**

(21) Application number: **08865368.8**

(22) Date of filing: **18.12.2008**

(51) Int Cl.:
*C23C 2/02* (2006.01)  *C23C 2/06* (2006.01)
*C21D 9/52* (2006.01)  *C21D 1/76* (2006.01)
*C21D 9/46* (2006.01)  *C21D 9/48* (2006.01)
*C22C 38/00* (2006.01)  *C22C 38/60* (2006.01)

(86) International application number:
**PCT/JP2008/073668**

(87) International publication number:
**WO 2009/081997 (02.07.2009 Gazette 2009/27)**

(54) **PROCESS FOR PRODUCING HIGH-STRENGTH HOT-DIP GALVANIZED STEEL SHEET**

VERFAHREN ZUR HERSTELLUNG VON HOCHFESTEM FEUERVERZINKTEM STAHLBLECH

PROCÉDÉ DE FABRICATION D'UNE FEUILLE D'ACIER GALVANISÉ À CHAUD À HAUTE RÉSISTANCE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 JP 2007328743**

(43) Date of publication of application:
**01.09.2010 Bulletin 2010/35**

(73) Proprietor: **JFE Steel Corporation
Tokyo, 100-0011 (JP)**

(72) Inventors:
• **SUZUKI, Yoshitsugu
Tokyo 100-0011 (JP)**
• **MATSUDA, Hiroshi
Tokyo 100-0011 (JP)**

• **KAWANO, Takashi
Tokyo 100-0011 (JP)**
• **FUSHIWAKI, Yusuke
Tokyo 100-0011 (JP)**
• **SUGIMOTO, Yoshiharu
Tokyo 100-0011 (JP)**

(74) Representative: **Grünecker Patent- und
Rechtsanwälte
PartG mbB
Leopoldstraße 4
80802 München (DE)**

(56) References cited:
**WO-A1-2005/017214      WO-A1-2007/066600
JP-A- 6 212 383           JP-A- 2006 233 333
JP-A- 2007 009 317        JP-A- 2007 039 780**

**Description**

Technical Field

The present invention relates to methods for manufacturing a high strength hot-dip galvanized steel sheet and a high strength hot-dip galvannealed steel sheet, which are used in the fields of, for example, automobile and electrical industries and which have superior formability and coating properties.

Background Art

In recent years, in view of global environmental conservation, improvement in fuel consumption of automobiles has become an important subject. Hence, a decrease in automobile weight itself has been actively attempted in such a way that the thickness of automobile parts is decreased by increasing the strength of materials forming automobile bodies. However, since the formability of steel sheets is degraded when the strength thereof is increased, development of materials that can simultaneously satisfy a high strength and superior formability has been desired.
In order to meet the above demand, various multiphase steel sheets, such as ferrite-martensite dual-phase steel (DP steel) and TRIP steel (Transformation Induced Plasticity) using transformation induced plasticity of retained austenite, have been developed. For example, Patent Document 1 has proposed a method for manufacturing a low yield-ratio and high tensile strength steel sheet having superior surface properties and bending workability, which is obtained by defining chemical components, hot rolling conditions, and annealing conditions; Patent Document 2 has proposed a method for manufacturing a high strength steel sheet having superior mechanical properties, which is obtained by defining chemical components, the amount of martensite, and a manufacturing method; Patent Document 3 has proposed a method for manufacturing a steel sheet having superior bending properties, which is obtained by defining hot rolling conditions and annealing conditions for steel having a predetermined composition; and Patent Document 4 has proposed a method for manufacturing a steel sheet having superior collision safety and formability, which is obtained by defining the fraction of martensite, grain diameters thereof, and mechanical properties. In addition, Patent Document 5 has proposed a steel sheet having superior stretch flangeability, which is obtained by defining chemical components, constituent phases, and a hardness ratio therebetween, and Patent Document 6 has proposed a steel sheet having superior fatigue characteristics, which is obtained by defining chemical components, constituent phases, grain diameters thereof, a hardness ratio, and the like.
When the steel sheets described above are actually used, the surfaces thereof may be processed by coating in some cases in order to improve rust resistance. In order to ensure press properties, spot welding properties, and paint adhesion, among various coating methods, hot-dip galvannealing has been frequently used in which Fe in a steel sheet is diffused in a coating layer by performing a heat treatment following coating , and various steel sheets have been developed.
As proposals relating to hot-dip galvanized coated steel sheets, Patent Document 7 has proposed a high strength hot-dip galvannealed steel sheet and a manufacturing method thereof, the steel sheet having superior ductility and workability, which is obtained by defining chemical components and the amount of retained austenite; Patent Document 8 has proposed a high strength steel sheet, a high strength hot-dip galvanized steel sheet, a high strength hot-dip galvannealed steel sheet, and manufacturing methods thereof, the above steel sheets having superior stretch flangeability and collision safety, which are obtained by defining chemical components, the fraction of martensite, and grain diameters thereof; and Patent Document 9 has proposed a high strength steel sheet, a high strength hot-dip galvanized steel sheet, a high strength hot-dip galvannealed steel sheet, and manufacturing methods thereof, the steel sheets having superior stretch flangeability, shape freezing properties, and collision resistance, which are obtained by defining chemical components, grain diameters of ferrite, aggregate texture thereof, and the fraction of martensite.
In addition, Patent Documents 10 to 13 have proposed a method for manufacturing a steel sheet having superior elongation, hole expansion, and bending properties, which is obtained by defining heat treatment conditions in a continuous hot dip galvanizing line performed on steel having a predetermined composition. Patent Documents 14 and 15 have proposed a high strength hot-dip galvanized steel sheet, a method for manufacturing the same, and facilities therefor, the steel sheet having superior stretch flangeability and bending properties, which is obtained by defining chemical components and manufacturing conditions in a hot dip galvanizing line.
Furthermore, as a steel sheet in which coating properties and coating quality are also taken into consideration, Patent Document 16 has proposed a steel sheet having superior shape freezing properties, coating adhesion, and ductility, which is obtained by defining chemical components, the amount of martensite, and a Fe concentration in a coating layer, and Patent Document 17 has proposed a steel sheet having superior ductility, flaking properties, and powdering properties, which is obtained by defining chemical components, the amount of retained austenite, and Fe and Al concentrations in a coating layer. In addition, in order to ensure good coating surface appearance even on high-Si and high-Mn steel, Patent Document 18 has proposed a hot-dip galvanized steel sheet having superior surface appearance without bare-spot defect areas, which is obtained by appropriately controlling the conformation of a Si-Mn enriched layer formed in the vicinity of the interface between a coating layer and a base steel sheet. Patent Document 19 has proposed a high strength hot-dip galvannealed steel sheet having superior formability and coating adhesion, which is obtained by defining chemical components and manufacturing conditions.

Patent Document 1: Japanese Patent No. 1853389
Patent Document 2: Japanese Unexamined Patent Application Publication (Translation of PCT application) No. 2003-505604
Patent Document 3: Japanese Patent No. 3610883
Patent Document 4: Japanese Unexamined Patent Application Publication No. 11-61327
Patent Document 5: Japanese Unexamined Patent Application Publication No. 10-60593
Patent Document 6: Japanese Unexamined Patent Application Publication No. 7-11383
Patent Document 7: Japanese Patent No. 3527092
Patent Document 8: Japanese Unexamined Patent Application Publication No. 2003-213369
Patent Document 9: Japanese Unexamined Patent Application Publication No. 2003-213370
Patent Document 10: Japanese Patent No. 2862186
Patent Document 11: Japanese Patent No. 2862187
Patent Document 12: Japanese Patent No. 2761095
Patent Document 13: Japanese Patent No. 2861096
Patent Document 14: Japanese Unexamined Patent Application Publication No. 6-93340
Patent Document 15: Japanese Unexamined Patent Application Publication No. 6-108152
Patent Document 16: Japanese Unexamined Patent Application Publication No. 2004-115843
Patent Document 17: Japanese Unexamined Patent Application Publication No. 2002-47535
Patent Document 18: Japanese Unexamined Patent Application Publication No. 2001-288550
Patent Document 19: Japanese Patent No. 3459500

However, the above-described inventions have the following problems. For example, according to Patent Document 1, although it is defined that annealing is performed in a single phase region, and that subsequent cooling is then performed to 400°C at a rate of 6 to 20°C/s, in the case of a hot-dip galvanized steel sheet, the coating adhesion must be taken into consideration, and since cooling to 400°C is cooling to a coating bath temperature or less, the temperature must be increased before coating is performed; hence, manufacturing cannot be performed by a CGL (continuous hot-dip galvanizing line) having no temperature rising apparatus in front of a coating bath. In addition, according to Patent Documents 2, 3, 4, 6, 7, and 9, the stretch flangeability is not taken into consideration, and in particular, when hot-dip galvanizing is performed, the coating adhesion and the stretch flangeability cannot be stably obtained.

According to Patent Document 5, it has been proposed to ensure the stretch flangeability by forming the constituent phases using ferrite and bainite or pearlite; however, sufficient ductility cannot be obtained in this case. According to Patent Document 8, it is attempted to improve the stretch flangeability and the collision resistance by defining the chemical components and the grain size of martensite; however, in particular, when hot-dip galvanizing is performed on a composite texture of ferrite and martensite, superior stretch flangeability cannot be stably obtained.

According to Patent Document 10, although the ductility is superior, the hole expansion properties and the bending properties are not taken into consideration, and on the other hand, according to Patent Documents 11 and 12, although the hole expansion properties and the bending properties are superior, the ductility is not taken into consideration. In addition, according to Patent Document 13, since improvement in ductility is a primary object, the hole expansion properties are not sufficient, and hence the steel of this invention can only be applied to limited parts. In addition, according to Patent Documents 14 and 15, since tempered martensite must be generated during a heat treatment in a hot-dip galvanizing line, an apparatus to perform re-heating is required after cooling is performed to the Ms point or less.

In addition, according to Patent Documents 16 and 17, although the coating properties and the coating adhesion can be ensured, the stretch flangeability is not taken into consideration, and in particular, when hot-dip galvanizing is performed, the coating adhesion and the stretch flangeability cannot be stably obtained. According to Patent Document 18, although the surface appearance is superior when Si-Mn enriched layers are present in grain boundaries in the vicinity of the interface, mechanical properties cannot be sufficiently ensured, and in addition, there has been a problem in that the properties seriously vary.

Patent Document 19 has proposed a steel sheet having superior formability and coating adhesion, which is obtained by defining the chemical components and the manufacturing conditions; however, only by the chemical components and manufacturing conditions defined in Patent Document 19, the properties seriously vary, and a steel sheet having superior formability cannot be always obtained.

Finally, WO2007/066600 A1 discloses a method for manufacturing a galvannealed steel sheet in a CGL, comprising a DFF oxidation step in which the air/fuel ratio is set to 1.3.

The present invention is to provide methods for manufacturing a high strength hot-dip galvanized steel sheet and a high strength hot-dip galvannealed steel sheet, the steel sheets having a tensile strength level of 590 MPa, which can solve the above problems, and which has good coating properties superior formability.

Disclosure of Invention

The present invention provides a method for manufacturing a high strength hot-dip galvanized steel sheet having the features of claim 1. A method is also provided for manufacturing the inventive high strength hot-dip galvanized steel sheet which has the features as defined in claim 2.

Best Modes of Carrying Out the Invention

In order to obtain a high strength hot-dip galvanized steel sheet having superior ductility and stretch flangeability, the inventors of the present invention carried out intensive research focusing on microstructures and chemical components of a steel sheet and further focusing on steel sheet textures in the vicinity of a coating layer. As a result, even in DP steel composed of ferrite and non-tempered martensite in which the stretch flangeability is heretofore difficult to be ensured, by appropriately controlling a distribution mode of oxides and the sizes thereof, which are formed in a steel sheet surface layer in the vicinity of the interface with a coating layer, as well as controlling the fraction and the hardness of ferrite, a method for manufacturing a high strength hot-dip galvanized steel sheet which has not only superior coating surface appearance and ductility but also can ensure sufficient stretch flangeability and a method for manufacturing a high strength hot-dip galvannealed steel sheet are invented.

Hereinafter, the present invention will be described in detail.

In general, in a dual phase structure of ferrite and non-tempered hard martensite, it has been known that although the ductility can be ensured, since the difference in hardness between ferrite and martensite is large, sufficient stretch flangeability cannot be obtained. Hence, heretofore, in order to ensure the stretch flangeability, ferrite is used as a primary phase, and pearlite and/or bainite which contains carbide is used as a hard secondary phase to decrease the difference in hardness; however, in this case, sufficient ductility cannot be disadvantageously ensured. In addition, also in the case in which martensite or retained austenite (which also includes bainite including retained austenite) is used as the secondary phase, in order to ensure the stretch flangeability as well as the ductility, for example, investigation has been carried out in which the secondary phase texture is consist of a multiphase of martensite and bainite. However, in order to form the secondary phase including various phases and to control the fractions thereof with high accuracy, heat treatment conditions must be accurately controlled, and problems of manufacturing stability and the like are liable to occur.

The inventors of the present invention not only carried out investigation in detail on the relationship of mechanical properties with the difference in hardness between phases and their fractions, as described above, but also carried out investigation on the changes in properties caused by coating and the probability of improvement of the properties. In the investigation, research was carried out in detail, in particular, focusing on the probability of improvement of properties of DP steel composed of ferrite and non-tempered martensite, which requires no specialized apparatus in a heat treatment in a hot-dip galvanizing line and which is believed to be most stably manufactured thereby.

As a result, as for the relationship between the mechanical properties and the phase structure of a steel sheet itself, it was found that when ferrite is solid-solution strengthened, and when the fraction thereof is considerably increased, the decrease in stretch flangeability caused by the difference in hardness is significantly suppressed, and the influence of the difference in hardness is hardly observed. In addition, when this effect described above is fully utilized, it was found that even in DP steel in which non-tempered martensite is used as the secondary phase, sufficient stretch flangeability can be ensured. Furthermore, by using the solid-solution strengthening of ferrite, the strength is ensured when the fraction of ferrite is increased, and as a result, microstructures of a base metal of the present invention is determined.

As described above, the solid-solution strengthening of ferrite is primarily performed to ensure the strength, and heretofore, when the hard secondary phase is composed of non-tempered martensite, the effect of suppressing the difference in hardness cannot be sufficiently obtained even when the solid solution strengthening ability of ferrite is utilized; however, when the volume fraction is optimized, the stretch flangeability can be ensured, and this is one of the features of the present invention. In particular, when the volume fraction of ferrite is set to 90% or more, the degradation in stretch flangeability caused by the difference in hardness can be suppressed, and when HV (Vickers hardness) of ferrite is set to 120 or more in this case, the strength can be ensured, so that a steel sheet texture of the present invention can be obtained.

In addition, microstructures of the steel sheet described above can be obtained by annealing a steel sheet, which includes on a mass percent basis, as chemical components, 0.005% to 0.12% of C, 0.7% to 1.8% of Si, 0.5% to 2.8% of Mn, 0.1% or less of P, 0.07% or less of S, 1.0% or less of Al, 0.008% or less of N, and the balance being Fe and incidental impurities, in a temperature range of 700 to 940°C for 15 to 600 seconds; subsequently, performing cooling to a temperature range of 440 to 550°C at a cooling rate of 3°C/s or more; and then dipping the steel sheet at a temperature of 440 to 550°C into a hot-dip galvanizing bath at a temperature of 440 to 500°C for 200 seconds or less to perform hot-dip galvanizing.

By the heat history described above, a desired texture can be ensured, and good mechanical properties can be obtained; however, since large amounts of Si and Mn, which are easily oxidizable elements, are added in a steel sheet, bare-spot defect and/or galvannealing delay occurs in a conventional continuous hot-dip galvanizing process, and the coating adhesion is degraded.

In addition, also in the case of the above-described microstructures of the steel sheet, it was found that since the stretch flangeability seriously varies when hot-dip galvanizing is performed, sufficient stretch flangeability cannot be always stably obtained. Hence, the inventors of the present invention carried out intensive research on factors causing variation of the stretch flangeability when hot-dip galvanizing is performed.

As a result, it was found that when inclusions, such as internal oxides, are generated in a steel sheet surface layer to ensure coating properties, the distribution of oxides (Si and Mn based) present at the interface between the coating layer and the steel sheet have influences on the stretch flangeability. In addition, it was found that when the amount of oxides present in grain boundaries in the steel sheet surface layer is decreased, the stretch flangeability can be stably ensured. In particular, when the length of grain boundaries in which the oxides are precipitated is set to 50% or less of the total length of grain boundaries in a region from just under the coating layer to a 3-$\mu$m depth of a base iron surface layer, the stretch flangeability is stabilized. Furthermore, in the region from just under the coating layer to a 3-$\mu$m depth of the base iron surface layer, when the average length of the oxides along the grain boundaries, which are precipitated therein, is set to 0.3 $\mu$m or less, superior stretch flangeability can be more stably ensured.

Although this effect is also basically obtained in other microstructures, a significant effect can be obtained particularly when DP steel using ferrite and non-tempered martensite, which is the texture of the steel sheet of the present invention, is used. The reason for this is believed that, compared to the case in which tempered martensite, bainite, or pearlite is used as the secondary phase, in the steel of the present invention which uses ferrite and non-tempered harder martensite, voids are very likely to be generated in the steel sheet surface layer region during shearing, such as punching, or during stretch flange formation performed after shearing.

The inventors of the present invention carried out intensive research on a method in which oxides are precipitated as described above in grain boundaries present in a region from just under a coating layer to a 3-$\mu$m depth of a base iron surface layer. As a result, when heating is performed in a CGL having a DFF type heating zone in which a CO/H$_2$O ratio of an atmospheric gas composition in the heating zone is set in the range of 0.001 to 0.8 (volume ratio), a width-direction temperature deviation at a steel sheet temperature of 700°C or more is set to less than 20°C at a heating zone outlet side, and an average temperature rising rate from 400°C to a heating zone outlet side temperature in the heating zone is set to 10°C/s or more, followed by recrystallization annealing, at least one oxide selected from the group consisting of Si, Mn, Al, and P can be precipitated in base iron crystalline grains and/or crystalline grain boundaries in the region from just under the coating layer to a 3-$\mu$m depth of the base iron surface layer, and the length of the grain boundaries in which inclusions, such as oxides, are precipitated can be set to 50% or less of the total length of the grain boundaries in the region from just under the coating layer to a 3-$\mu$m depth of the base iron surface layer. As a result, it was found that the generation of bare-spot defect , galvannealing delay, and galvannealing unevenness caused thereby, and degradation in coating adhesion and that in stretch flangeability can both be prevented. The reason for this is that since the steel sheet surface layer is internally oxidized, a depletion layer of easily oxidizable elements, such as Si, Mn, Al, and P, is formed, and the easily oxidizable elements, such as Si, Mn, Al, and P, are unlikely to be selectively oxidized, so that the effect can be obtained. Furthermore, in order to improve the coating adhesion, a hot-dip galvanizing bath temperature is set to 440 to 500°C, and the steel sheet at a temperature of 440 to 550°C is dipped therein, so that hot-dip galvanizing is performed.

As described above, in DP steel composed of ferrite and non-tempered martensite in which the stretch flangeability is heretofore difficult to be ensured, the present invention can decrease the influence of degrading the stretch flangeability due to the difference in hardness from the second phase by significantly increase the fraction of ferrite to improve the stretch flangeability of a steel sheet itself, can further ensure stable and good stretch flangeability without variation by optimizing the microstructures of the steel sheet in the vicinity of the interface with the coating layer, can simultaneously ensure the strength by solid-solution strengthening of a ferrite phase even if the faction of the hard secondary phase is decreased, and can ensure the ductility by maximally utilizing superior workability of the ferrite phase. Those described above are features of the present invention.

As described above, in order to obtain a high strength hot-dip galvanized steel sheet having superior ductility and stretch flangeability, the inventors of the present invention carried out intensive research focusing on microstructures and chemical components of a steel sheet and further focusing on steel sheet textures in the vicinity of the coating layer. As a result, also even in DP steel composed of ferrite and non-tempered martensite in which the stretch flangeability is heretofore difficult to be ensured, by appropriately controlling the oxides formed in the steel sheet surface layer in the vicinity of the interface with the coating layer as well as controlling the fraction and the hardness of ferrite, a method for manufacturing a steel sheet which can ensure sufficient stretch flangeability and which has superior ductility and coating adhesion is invented.

Next, chemical components of the high strength hot-dip galvanized steel sheet and the high strength hot-dip galvannealed steel sheet of the present invention will be described. The unit of the content of each element is represented by "mass percent"; however, hereinafter, the unit is simply represented by "%" unless otherwise stated.

C: 0.005% to 0.12%

C is an essential element to increase the strength of a steel sheet, and when the content thereof is less than 0.005%, it is difficult to ensure the strength of a steel sheet and to satisfy predetermined properties thereof. On the other hand, when the content of C is more than 0.12%, it is not only difficult to ensure 90% or more of the fraction of ferrite but also it is liable to degrade the weldability since a welded portion and a heat influenced portion are excessively hardened. From the points described above, the content of C is set in the range of 0.005% to 0.12%. In order to stably ensure the fraction of ferrite, the content is preferably less than 0.08% and is more preferably less than 0.04%.

Si: 0.7% to 1.8%

Si is a ferrite forming element and is an effective element for solid-solution strengthening of ferrite, and in order to ensure the ductility and the hardness of ferrite, 0.7% or more of Si must be added. However, when Si is excessively added, due to the generation of red scale or the like, surface conditions and/or coating adhesion properties are degraded. Hence, the addition amount of Si is set in the range of 0.7% to 1.8%. The amount is preferably more than 0.9%.

Mn: 0.5% to 2.8%

Mn is an effective element to strengthen steel. In addition, Mn is an element to stabilize austenite and is an essential element to adjust the fraction of the secondary phase. For this purpose, 0.5% or more of Mn must be added. On the other hand, when more than 2.8% of Mn is excessively added, the fraction of the secondary phase is excessively increased, and as a result, it is difficult to ensure the fraction of ferrite. Hence, the content of Mn is set in the range of 0.5% to 2.8%. The content is preferably 1.6% or more.

P: 0.1% or less

P is an effective element to strengthen steel; however, when more than 0.1% of P is excessively added, embrittlement occurs due to grain boundary segregation, and impact resistance is degraded. In addition, when the content of P is more than 0.1%, an galvannealing rate is seriously decreased. Hence, the content of P is set to 0.1% or less.

S: 0.07% or less

Since S forms inclusions, such as MnS, and causes degradation in impact resistance and cracking of a weld along a metal flow, the content thereof is preferably decreased as small as possible; however, in consideration of manufacturing cost, the content is set to 0.07% or less.

Al (sol. Al): 1.0% or less

Al is a ferrite forming element and is an effective element to control a ferrite production amount in manufacturing. However, excessive addition of Al degrades slab quality in steel making. Hence, the addition amount of Al is set to 1.0% or less. The addition amount is preferably 0.5% or less.

N: 0.008% or less

Since N is an element to most seriously degrade anti-aging properties of steel, the content thereof is preferably decreased as small as possible, and when the content is more than 0.008%, the anti-aging properties are seriously degraded. Hence, the content of N is set to 0.008% or less.

The steel sheet of the present invention includes the above basic components and iron as a primary component. The primary component is a component which does not prevent incidental impurities from being contained, does not degrade the functions of the basic components but rather improves the functions thereof or which does not prevent an element capable of improving mechanical and chemical properties from being contained, and which may contain, for example, at least one element of Cr, V, and Mo described below.

Cr: 0.05% to 1.2%, V: 0.005% to 1.0%, and Mo: 0.005% to 0.5%

Since Cr, V, and Mo each have a function to suppress the generation of pearlite when cooling is performed from an annealing temperature, the above element may be added whenever necessary. The effect can be obtained when the content of Cr is 0.05% or more, the content of V is 0.005% or more, and the content of Mo is 0.005% or more. However, when more than 1.2% of Cr, more than 1.0% of V, and more than 0.5% of Mo are each added, due to an excessive fraction of the secondary phase, the strength may be seriously increased in some cases. Hence, when the elements described above are added, the contents of Cr, V, and Mo are set to 1.2% or less, 1.0% or less, and 0.5% or less, respectively.

Furthermore, at least one element of the following Ti, Nb, and B may be contained.

Ti: 0.01% to 0.1%, and Nb: 0.01% to 0.1%

Ti and Nb are effective for precipitation strengthening of steel, the effect thereof can be obtained when the contents are each 0.01% or more, and Ti and Nb may be used to strengthen steel when the content thereof is within the range defined by the present invention. However, when the content is more than 0.1%, the formability and the shape freezing properties are degraded. Hence, when Ti and Nb are added, the addition amounts of Ti and Nb are each set in the range of 0.01% to 0.1%.

B: 0.0003% to 0.0050%

Since having a function to suppress the generation and growth of ferrite from austenite grain boundaries, B may be added whenever necessary. The effect can be obtained at a content of 0.0003% or more. However, when the content is more than 0.0050%, the formability is degraded. Hence, when B is added, the content thereof is set in the range of 0.0003% to 0.0050%.

Furthermore, at least one of the following Ni and Cu may be contained.

Ni: 0.05% to 2.0%, Cu: 0.05% to 2.0%

Ni and Cu are effective elements to strengthen steel and may be used to strengthen steel so long as the content is within the range defined by the present invention. In addition, Ni and Cu facilitate internal oxidation and improve coating adhesion. The effect described above can be obtained when the contents are each 0.05% or more. However, when more than 2.0% is added, the formability of a steel sheet is degraded. Hence, when Ni and Cu are added, the addition amounts thereof are each set in the range of 0.05% to 2.0%.

Furthermore, at least one element of the following Ca and REM may be contained.

Ca: 0.001% to 0.005%, REM: 0.001% to 0.005%

Ca and REM make the shape of sulfide spherical and are effective elements to suppress adverse influences of sulfides on the stretch flangeability. The effect can be obtained when the content is 0.001% or more. However, when the above elements are each excessively added, inclusions and the like are increased, and for example, surface and internal defects occur. Hence, when Ca and REM are added, the addition amounts thereof are each set in the range of 0.001% to 0.005%.

The balance other than those described above is Fe and incidental impurities.

Next, the methods for manufacturing a high strength hot-dip galvanized steel sheet and a high strength hot-dip galvannealed steel sheet of the present invention will be described.

According to the present invention, a steel sheet having the above-described chemical composition is heated and annealed and is then processed by hot-dip galvanizing using a CGL (continuous hot-dip galvanizing line) having a DFF type heating zone.

Inclusions, such as oxides, can be introduced into the base iron surface layer just under the coating layer in such a way that an oxygen potential in the surface layer of the steel sheet is increased in an annealing step to cause internal oxidation of the base iron surface layer portion. For example, a method may be mentioned in which in a CGL having a DFF type heating zone, a steel sheet is heated to 700°C or more at a heating zone outlet side to form a Fe-based scale adhered to the steel sheet surface layer, and the Fe-based scale then functions as an oxygen supply source in a subsequent reducing zone and internally oxidizes the steel sheet surface layer. When the steel sheet temperature at the heating zone outlet side is less than 700°C, since the amount of the generated Fe-based scale is insufficient, an internal oxidation layer is not formed when reduction annealing is performed in the reducing zone, bare-spot defect , galvannealing delay, and galvannealing unevenness caused thereby are generated, and the coating adhesion is degraded. When the steel sheet temperature at the heating zone outlet side is not less than the annealing temperature in the reducing zone, a desired microstructures cannot be obtained, and hence the steel sheet temperature at the heating zone outlet side is set to less than the annealing temperature in the reducing zone. When a sheet temperature at the heating zone outlet side is the above-described temperature or more, the ratio of grain boundaries in which oxides are present is more than 50%, and the average length of oxides along grain boundaries is more than 0.3 $\mu$m. In addition, it is necessary that the steel sheet temperature at the heating zone outlet side be set so that the width-direction temperature deviation is less than 20°C. When the temperature deviation is 20°C or more, since the microstructures of the steel sheet and the amount of the formed internal oxidation layer vary in the width direction, the difference in mechanical strength is locally increased; hence, deformation behavior irregularities are generated during plastic working, and as a result, the stretch flangeability is degraded.

The width-direction temperature deviation of the steel sheet temperature at the heating zone outlet side can be adjusted by output adjustment of a plurality of burners disposed in the width direction of the heating zone. In particular, since the temperatures at two end portions of a steel sheet are likely to increase, among a plurality of burners, such as four burners, disposed in the width direction, when outputs of two burners disposed at the two end portions are decreased by adjusting a flow rate of a combustion gas while the temperature distribution in the width direction measured by a radiation thermometer is monitored, the width-direction temperature deviation can be suppressed to be less than 20°C.

In addition, the average temperature rising rate from 400°C to a heating zone outlet side temperature in the heating zone is set to 10°C/s or more. When the average temperature rising rate is less than 10°C/s, since oxygen supplied from a heating zone atmosphere in a temperature rising step is diffused inside the steel sheet surface layer portion, an excessive internal-oxidized layer is formed. As a result, in the region from just under the coating layer to a 3-$\mu$m depth of the base iron surface layer, which is a region having most significant influence on the stretch flangeability when reduction annealing is performed in the subsequent reducing zone, the length of the grain boundaries in which inclusions, such as oxides, are precipitated is more than 50% of the total length of the grain boundaries, or the average length of oxides along the grain boundaries, which are precipitated therein, is more than 0.3 $\mu$m, so that the stretch flangeability is degraded. The reason the temperature is set to 400°C or more is that a Fe-based scale is not actually formed at a temperature of less than 400°C.

Furthermore, the CO/H$_2$O ratio (volume ratio) of the atmospheric gas composition in the heating zone is set in the range of 0.001 to 0.8. Since a combustion gas, such as coke gas, is mixed in the heating zone, various gas compositions may be formed; however, among those mentioned above, CO, which is one type of unburnt gas, has a function to reduce H$_2$O to H$_2$ by dissociation equilibrium with H$_2$O. Accordingly, when the CO concentration is increased, the oxidation of a steel sheet is suppressed. On the other hand, since H$_2$O is dissociated on a steel sheet surface to generate O, the steel sheet is oxidized. Hence, in order to positively oxidize a steel sheet, it is necessary to decrease the CO concentration and to increase the relative amount of H$_2$O. However, when the ratio is more than 0.8, even if the DFF outlet side temperature is set to 700°C or more, the oxidized amount of Fe cannot be ensured since the reduction effect is preferential, and bare-spot defect , galvannealing delay, and galvannealing unevenness caused thereby occur, so that more than 0.8 is not appropriate since it is difficult to ensure the coating adhesion. When the ratio is less than 0.001, since the oxidized amount of Fe is excessive in the heating zone, reduction cannot be performed in the reducing zone; hence, less than 0.001 is not appropriate since the ratio of the grain boundaries in which the oxides are present is more than 50%, and since the average length of the oxides along the grain boundaries is more than 0.3 $\mu$m.

Heretofore, the atmospheric gas composition in DFF or NOF has been controlled by combusting a mixture containing so-called coke gas and air. However, since the composition of coke gas varies day by day depending on components of coke, the place of origin of coal, and the like, the CO/H$_2$O ratio cannot be controlled by simply combusting coke gas mixed with air. Accordingly, in the present invention, in order to control the CO/H$_2$O ratio, when the ratio is not in the range described above, apparatuses of generating CO and water vapor must be installed outside the furnace so that CO and water vapor are separately supplied.

Next, by performing reduction annealing in the reducing zone for 15 to 600 seconds in a temperature range of 700 to 940°C, in particular, in an austenite single phase region or a dual phase region of an austenite phase and a ferrite phase, the fraction of ferrite is set to 90% or more, and HV is set to 120 or more. When the annealing temperature is less than 700°C, and/or the annealing time is less than 15 seconds, carbides in a steel sheet may not be sufficiently melted in some cases, or desired properties may not be obtained in some cases since recrystallization of ferrite is not completed. On the other hand, when the annealing temperature is more than 940°C, since the growth of austenite grains is significant, the number of nucleation sites of ferrite generated from the secondary phase by cooling after the annealing is decreased, and as a result, a steel sheet texture intended by the present invention may not be obtained in some cases. In addition, when annealing is performed for an annealing time of more than 600 seconds, cost is increased due to tremendous energy consumption. Hence, the annealing temperature is set in the range of 700 to 940°C, and the annealing time is set in the range of 15 to 600 seconds.

After the annealing, cooling is performed to a temperature in the range of 440 to 550°C at a cooling rate of 3°C/s or more, and hot-dip galvanizing is then performed for 200 seconds or less. When the cooling rate is less than 3°C/s, for example, pearlite is precipitated, and a desired microstructures may not be obtained in some cases. In addition, when the dipping time in a coating bath in a temperature range of 440 to 550°C is more than 200 seconds, for example, bainite transformation is advanced, and as a result, a desired texture may not be obtained in some cases.

In the hot-dip galvanizing, when a hot-dip galvanized steel sheet (the coating layer is not processed by an galvannealing. This steel sheet may be sometimes referred as "GI" in this specification.) is manufactured or when an hot-dip galvannealed steel sheet (which is processed by an galvannealing after the hot-dip galvanizing. This steel sheet may be sometimes referred to as "GA" in this specification), a steel sheet at a temperature of 440 to 550°C is dipped in a coating bath containing 0.12 to 0. 22 mass percent of molten Al or 0.08 to 0.18 mass percent of molten Al, respectively, and the coating amount is adjusted by gas wiping or the like. The hot-dip galvanizing bath temperature may be set in a general temperature range of 440 to 500°C, and when the galvannealing is further performed, the steel sheet is preferably heated to 460 to 600°C for the treatment. When the temperature is more than 600°C, since carbides are precipitated from non-transformed austenite (which may be formed into pearlite in some cases), a desired microstructures cannot be obtained; hence, the ductility is degraded, and the powdering properties are also degraded. When the temperature is less than 460°C, galvannealing is not advanced.

The coating amount is set in the range of 20 to 150 $g/m^2$ per one surface. When the amount is less than 20 $g/m^2$, the corrosion resistance is degraded. When the amount is more than 150 $g/m^2$, cost is increased, and the corrosion resistance is saturated.

When the galvannealing is performed, the degree of galvannealing (Fe percent in the coating layer) is set in the range of 7 to 15 mass percent. When the degree is less than 7 mass percent, galvannealing unevenness are generated to degrade the appearance, and/or a so-called ζ phase is generated to degrade sliding properties. When the degree is more than 15 mass percent, a large amount of a hard and brittle Γ phase is formed, and the coating adhesion is degraded.

Vickers Hardness (HV) of ferrite is estimated as the average of measured values for arbitrary five points of the ferrite (N=5).

In order to confirm the formation status of inclusions in the steel sheet surface layer portion just under the coating layer, for example, SEM (scanning electron microscope) observation using a sample having a mirror-polished cross-section or cross-sectional TEM (transmission electron microscope) observation using a thin sample sliced by FIB (focused ion beams) is effectively used. The identification of inclusions may be performed, for example, using SEM-EDS (energy dispersion type x-ray analysis) using a sample having a polished cross-section, EPMA (electron probe microanalyzer), or FE-AES (field emission-Auger electron spectroscopy), and for further detailed analysis, for example, TEM-EDS using a replica test piece obtained from a thin sample or a test piece having a polished cross-section may be used.

The ratio of the grain boundaries in which inclusions are present can be evaluated from a cross-sectional image obtained by SEM or TEM in such a way that after the lengths of observed grain boundaries and the lengths of inclusions occupied on the grain boundaries are actually measured, the ratio therebetween is obtained. In this case, depending on the situation, image processing, such as binarization, may be effectively performed. The lengths of oxides along the grain boundaries, which are precipitated therein, can be actually measured from a cross-sectional image obtained by SEM or TEM in a manner similar to that described above.

In both cases described above, in order to improve the accuracy, it is important to increase the number of evaluation points. For example, in the case of SEM observation, at least arbitrary 5 fields of view are observed at a magnification of 5,000 times, at least 10 points are evaluated as the analytical points, and the average value thereof is preferably used as the evaluation value.

Regarding the method for manufacturing a steel sheet of the present invention, so long as a CGL having a DFF type heating zone is used, the heat treatment may be performed on a steel sheet using any type of apparatus. In addition, according to the present invention, the case is supposed in which a steel base material is processed by general steps of steel making, casting, and hot-rolling for manufacturing; however, manufacturing may be performed by partly or entirely omitting the hot-rolling step by using thin casting or the like. As a base steel sheet for coating , either a hot-rolled steel sheet or a cold-rolled steel sheet processed by a cold-rolling step following a hot-rolling step may be used.

Examples

Hereinafter, the present invention will be described in detail with reference to Examples; however, the present invention is not limited to the following examples, and any change and modification without departing from the spirit and scope of the present invention may also be included in the technical scope of the present invention.

A slab produced from steel containing chemical components shown in Table 1 was formed into a cold-rolled steel sheet having a thickness of 1.2 mm by cold rolling following hot-rolling and pickling. Subsequently, heating was performed in a CGL having a DFF type heating zone by appropriately changing the heating zone outlet side temperature, the air ratio, and the $CO/H_2O$ ratio by supplying $H_2O$ and CO in the heating zone whenever necessary. The DFF outlet side steel sheet temperature and the width-direction temperature distribution were measured using a radiation thermometer. After a heat treatment was performed in an austenite single phase region or a dual phase region, coating was performed using a zinc coating bath at a temperature of 463°C, or an galvannealing was further performed. On the steel sheet thus obtained, 0.3% temper rolling was performed.

The width-direction temperature deviation of the steel sheet temperature at the DFF outlet side was adjusted by a method for suppressing temperature deviation, in which outputs of two burners located at two ends among 4 burners provided in the width direction of the heating zone were decreased by adjusting the flow rate of combustion gas while the temperature distribution was monitored using at least one radiation thermometer located in the width direction. When the outputs at the two ends are exactly equal to those of the two burners located at the central portion, the temperatures at the two end portions are increased, and the width-direction temperature deviation is more than 20°C.

Ten fields of view of cross-sectional microstructures (surface parallel to the rolling direction) were observed at a magnification of 2,000 times using a scanning electron microscope (SEM) to measure the area ratio of each phase, and the phase structure of each grain was identified. In order to discriminate martensite from retained austenite, as texture observation samples, a sample processed by a heat treatment at 200°C for 2 hours and a product sample, which was a product without processed by tempering at 200°C for 2 hours, were used. By the heat treatment at 200°C for 2 hours, carbides were generated only from martensite without causing any change in phase fraction so as to discriminate martensite from retained austenite, and comparing to the above product sample, it was confirmed that no other changes occurred.

Hardnesses were obtained by conversion of impression diameters measured at 5 points (N=5) using a so-called Vickers hardness meter, and the average value thereof was used as HV of ferrite.

In addition, for evaluation of inclusions in a steel sheet surface layer portion located just under a coating layer and the amount of solid solution, a cross-sectional test piece having a coating /base material interface was formed by mirror-polishing of a cross-section of sample steel perpendicular to a steel sheet rolling direction.

In order to obtain the ratio of precipitates occupied in grain boundaries, five fields of view of reflection electron images in the vicinity of the coating /base material interface were obtained from the test piece at a magnification of 5,000 times using SEM. Among grain boundaries confirmed in each reflection electron image, the lengths of grain boundaries included in the region from the top to a 3-$\mu$m depth of an underlying steel sheet and the lengths of precipitates occupied on the grain boundaries were actually measured, and the average ratio obtained from the five fields of view thus observed was used as the evaluation value.

In order to obtain the average value of the lengths of the precipitates present in the grain boundaries, in evaluation of the above SEM images, the lengths of the precipitates along the grain boundaries were measured, and the average value was calculated.

A tensile strength test was performed in accordance with JIS Z2241 using a JIS No. 5 test piece which was obtained by machining a steel sheet. TS (tensile strength) and T. El (total elongation) were measured, and a strength-elongation balance value represented by the product of the strength and the total elongation (TS×T. El) was obtained. In the present invention, TS was judged good when TS≥590 MPa was satisfied, and TS×T. El was judged good when TS×T. El≥17,700 (MPa·%) was satisfied.

The stretch flangeability was evaluated in accordance with the Japan Iron and Steel Federation Standard, JFST, 1001. After obtained steel sheets were each cut into a size of 100 mm by 100 mm, and a hole having a diameter of 10 mm was formed with a clearance of 12% by punching, a conical punch having an angle of 60° was pushed into the hole while a wrinkle-suppressing pressure of 9 ton was applied to the steel sheet using a dice having an inside diameter of 75 mm, and a hole diameter at a crack generation limit was measured. Subsequently, a hole expansion limit λ (%) was obtained from the following formula, and the stretch flangeability was evaluated using the value of this hole expansion limit. In the present invention, TS×λ was judged good when TS×λ≥47,200 (MPa·%) was satisfied.

$$\texttt{Hole expansion limit } \lambda \texttt{ (\%)=\{(D}_f\texttt{-D}_0\texttt{)/D}_0\texttt{\}×100}$$

In the above formula, $D_f$ indicates a hole diameter (mm) at which a crack is generated, and $D_0$ indicates an original hole diameter (mm).

As the coating properties, the appearance after coating and the adhesion were evaluated for a non-hot-dip galvannealed steel sheet, and the appearance after an galvannealing and the adhesion (powdering properties) were evaluated for an hot-dip galvannealed steel sheet.

As for the appearance evaluation for the non-hot-dip galvannealed steel sheet, by visual inspection of the appearance after coating , a steel sheet without bare-spot defect was represented by ○, and a steel sheet with bare-spot defect was represented by ×. As for the adhesion, a ball impact test was performed in such a way that after a spindle having a weight of 1.8 kg was dropped from a height of 1 m onto a half-inch punch, a part of a coated steel sheet to which the impact was applied was peeled out using Cellotape (registered trade name), and the presence of coating layer peeling was determined by visual inspection. The results were evaluated as describe below.

○: No coating layer peeling
×: Coating layer peeling

When both the appearance evaluation and the adhesion evaluation were represented by ○, the coating properties were evaluated as good (evaluation ○), and when at least one of the above evaluations was represented by ×, the coating properties were evaluated as bad (evaluation ×).

As for the appearance evaluation for the hot-dip galvannealed steel sheet, by visual inspection of the appearance after an galvannealing, the appearance was represented by ○ when galvannealing unevenness and bare-spot defect were not observed, and the appearance was represented by × when galvannealing unevenness and bare-spot defect were observed. In addition, as for the adhesion, after Cellotape (registered trade name) was adhered onto a coated steel sheet, the steel sheet surface provided with the tape was bent by 90° and was then again bent back to the original position, and the peeling amount per unit length was obtained by measuring Zn count number using fluorescent x-ray. Subsequently, in accordance with the following standard, Ranks 1 and 2 were evaluated as good (O), and Rank 3 or more was evaluate as bad (×).

| Fluorescent x-ray count number | Rank |
| --- | --- |
| 0 to less than 500: | 1 (good) |
| 500 to less than 1,000: | 2 |
| 1,000 to less than 2,000: | 3 |
| 2,000 to less than 3,000: | 4 |
| 3,000 or more: | 5 (bad) |

When both the appearance evaluation and the adhesion evaluation were represented by ○, the coating properties were evaluated as good (evaluation ○), and when at least one of the above evaluations was represented by ×, the coating properties were evaluated as bad (evaluation ×).

In Tables 2 to 5, the evaluation results are collectively shown. As apparent from these results, it can be understood that a steel sheet which satisfies the conditions defined by the present invention ensures a required tensile strength, has superior balance between the value of strength-elongation balance and the stretch flangeability, has good coating properties, and can obtain desired properties.

Table 1

| Steel Type | Chemical component (mass percent) | | | | | | | | | | | | | | |
|---|---|---|---|---|---|---|---|---|---|---|---|---|---|---|---|
| | C | Si | Mn | sol.Al | P | S | N | Cr | V | Mo | Ti | Nb | B | Ca | REM |
| A | 0.010 | 1.49 | 2.51 | 0.040 | 0.011 | 0.005 | 0.0039 | | | | | | | | |
| B | 0.028 | 1.01 | 2.49 | 0.036 | 0.012 | 0.004 | 0.0023 | | | | | | | | |
| C | 0.025 | 1.51 | 2.02 | 0.041 | 0.012 | 0.004 | 0.0029 | | | | | | | | |
| D | 0.031 | 1.79 | 1.84 | 0.042 | 0.015 | 0.005 | 0.0040 | | | | | | | | |
| E | 0.032 | 1.65 | 2.04 | 0.039 | 0.009 | 0.004 | 0.0037 | | | | | | | | |
| F | 0.030 | 1.71 | 2.04 | 0.040 | 0.025 | 0.002 | 0.0038 | | | | | | | | |
| G | 0.049 | 1.50 | 1.62 | 0.041 | 0.010 | 0.004 | 0.0037 | | | | | | | | |
| H | 0.051 | 1.46 | 2.01 | 0.040 | 0.010 | 0.003 | 0.0041 | | | | | | | | |
| I | 0.078 | 1.50 | 1.80 | 0.039 | 0.013 | 0.004 | 0.0032 | | | | | | | | |
| J | 0.102 | 1.00 | 1.62 | 0.037 | 0.012 | 0.003 | 0.0033 | | | | | | | | |
| K | 0.125 | 0.75 | 1.81 | 0.041 | 0.010 | 0.003 | 0.0039 | | | | | | | | |
| L | 0.091 | 0.28 | 1.87 | 0.037 | 0.029 | 0.003 | 0.0041 | 0.20 | 0.05 | | | | | | |
| M | 0.145 | 0.48 | 1.40 | 0.037 | 0.029 | 0.003 | 0.0041 | | | | | | | | |
| N | 0.031 | 1.00 | 2.19 | 0.043 | 0.013 | 0.002 | 0.0043 | 0.21 | | | | | | | |
| Q | 0.030 | 1.50 | 2.00 | 0.040 | 0.013 | 0.003 | 0.0041 | 0.20 | | | | | | | |
| R | 0.031 | 0.98 | 2.10 | 0.041 | 0.011 | 0.004 | 0.0029 | 0.20 | | | | | | | |
| S | 0.028 | 1.49 | 2.01 | 0.037 | 0.013 | 0.002 | 0.0040 | | | | | | | | |
| T | 0.029 | 1.51 | 1.99 | 0.044 | 0.009 | 0.004 | 0.0031 | 0.12 | 0.05 | | | | | | |
| U | 0.033 | 0.99 | 2.10 | 0.042 | 0.011 | 0.003 | 0.0040 | | | 0.11 | | | | | |
| V | 0.011 | 1.50 | 2.48 | 0.037 | 0.013 | 0.004 | 0.0036 | | | | 0.025 | 0.020 | 0.0010 | | |
| W | 0.033 | 1.02 | 2.03 | 0.039 | 0.031 | 0.004 | 0.0037 | | | | 0.023 | | 0.0010 | | |
| X | 0.030 | 1.00 | 2.02 | 0.040 | 0.012 | 0.005 | 0.0040 | | | | 0.026 | 0.021 | 0.0011 | | |
| Y | 0.025 | 1.51 | 2.02 | 0.041 | 0.012 | 0.004 | 0.0035 | | | | | | | 0.003 | |

(continued)

| Steel Type | Chemical component (mass percent) | | | | | | | | | | | | | |
|---|---|---|---|---|---|---|---|---|---|---|---|---|---|---|
| | C | Si | Mn | sol.Al | P | S | N | Cr | V | Mo | Ti | Nb | B | Ca | REM |
| Z | 0.030 | 1.50 | 2.00 | 0.042 | 0.010 | 0.004 | 0.0039 | 0.20 | | | | | | | 0.002 |
| Note: Underline indicates outside the range of the present invention | | | | | | | | | | | | | | |

Table 2

| No. | Steel type | DFF | | | | | Annealing | | Cooling | | Time from cooling to plating | Steel sheet temperature dipped in plating bath | Alloying treatment temperature |
| | | Average temperature rising rate from 400°C~ DFF outlet side temperature (°C/s) | DFF outlet side temperature (°C) | Width-direction deviation of DFF outlet side temperature (°C) | $CO/H_2O$ ratio in DFF furnace (volume ratio) | Gas composition control | Annealing temperature (°C) | Annealing time (s) | Cooling temperature (°C) | Cooling rate after annealing (°C/s) | (s) | (°C) | (°C) |
|---|---|---|---|---|---|---|---|---|---|---|---|---|---|
| 1 | A | 12 | 765 | 10 | 0.001 | mixed with $H_2O$ | 850 | 60 | 500 | 12 | 40 | 460 | 520 |
| 2 | A | 12 | 750 | 10 | 0.05 | - | 820 | 60 | 500 | 12 | 80 | 460 | - |
| 3 | B | 12 | 720 | 10 | 0.1 | - | 850 | 60 | 500 | 12 | 40 | 480 | - |
| 4 | B | 12 | 710 | 10 | 0.05 | - | 880 | 60 | 500 | 12 | 180 | 460 | 520 |
| 5 | C | 12 | 755 | 10 | 0.3 | mixed with CO | 820 | 60 | 500 | 12 | 40 | 460 | 530 |
| 6 | D | 12 | 780 | 10 | 0.001 | mixed with '$H_2O$ | 880 | 60 | 500 | 12 | 60 | 460 | 520 |
| 7 | D | 12 | 770 | 10 | 0.01 | mixed with '$H_2O$ | 850 | 60 | 500 | 12 | 50 | 460 | - |
| 8 | E | 12 | 790 | 10 | 0.01 | mixed with '$H_2O$ | 880 | 60 | 500 | 12 | 40 | 480 | 520 |
| 9 | E | 12 | 760 | 10 | 0.2 | - | 850 | 60 | 500 | 12 | 10 | 460 | 520 |
| 10 | F | 12 | 790 | 10 | 0.01 | mixed with '$H_2O$ | 880 | 60 | 500 | 12 | 20 | 460 | 520 |
| 11 | G | 12 | 765 | 10 | 0.05 | - | 880 | 60 | 500 | 12 | 40 | 530 | 530 |
| 12 | G | 12 | 775 | 10 | 0.05 | - | 850 | 60 | 500 | 12 | 30 | 460 | 520 |
| 13 | G | 12 | 770 | 10 | 0.05 | - | 820 | 60 | 500 | 12 | 20 | 480 | 520 |
| 14 | H | 12 | 780 | 10 | 0.05 | - | 820 | 60 | 500 | 12 | 60 | 460 | 520 |
| 15 | I | 12 | 775 | 10 | 0.05 | - | 850 | 60 | 500 | 12 | 50 | 460 | 520 |

14

EP 2 224 033 B1

| No. | Steel type | DFF | | | | | Annealing | | Cooling | | Time from cooling to plating | Steel sheet temperature dipped in plating bath | Alloying treatment temperature |
|---|---|---|---|---|---|---|---|---|---|---|---|---|---|
| | | Average temperature rising rate from 400°C~ DFF outlet side temperature (°C/s) | DFF outlet side temperature (°C) | Width-direction deviation of DFF outlet side temperature (°C) | $CO/H_2O$ ratio in DFF furnace (volume ratio) | Gas composition control | Annealing temperature (°C) | Annealing time (s) | Cooling temperature (°C) | Cooling rate after annealing (°C/s) | (s) | (°C) | (°C) |
| 16 | J | 12 | 725 | 10 | 0.05 | - | 860 | 60 | 500 | 12 | 40 | 450 | 520 |
| 17 | <u>K</u> | 12 | 720 | 10 | 0.01 | mixed with 'H$_2$O | 850 | 6 | 500 | <u>2</u> | 10 | 460 | 520 |
| 18 | L | 12 | <u>640</u> | 10 | 0.05 | - | 830 | 6 | 500 | <u>2</u> | 20 | 460 | 520 |
| 19 | <u>M</u> | 12 | <u>670</u> | 10 | 0.05 | - | 820 | <u>6</u> | 500 | <u>2</u> | 40 | 460 | 520 |

Note: Underline indicates outside the range of the present invention

Table 3

| No. | Steel type | DFF | | | | | Annealing | | Cooling | | Time from cooling to plating | Steel sheet temperature dipped in plating bath | Alloying treatment temperature |
| --- | --- | --- | --- | --- | --- | --- | --- | --- | --- | --- | --- | --- | --- |
| | | Average temperature rising rate from 400°C~ DFF outlet side temperature (°C/s) | DFF outlet side temperature (°C) | Width-direction deviation of DFF outlet side temperature (°C) | CO/$H_2O$ ratio in DFF furnace (volume ratio) | Gas composition control | Annealing temperature (°C) | Annealing time (s) | Cooling temperature (°C) | Cooling rate after annealing (°C/s) | (s) | (°C) | (°C) |
| 20 | N | 12 | 710 | 10 | 0.01 | mixed with $H_2O$ | 850 | 60 | 500 | 12 | 30 | 460 | 540 |
| 21 | N | 8 | 790 | 10 | 0.01 | mixed with '$H_2O$ | 820 | 60 | 500 | 12 | 5 | 460 | 520 |
| 22 | Q | 12 | 745 | 10 | 0.01 | mixed with '$H_2O$ | 850 | 60 | 500 | 12 | 50 | 460 | 520 |
| 23 | R | 12 | 720 | 10 | 0.01 | mixed with '$H_2O$ | 840 | 60 | 500 | 12 | 40 | 480 | 520 |
| 24 | S | 12 | 775 | 10 | 0.01 | mixed with '$H_2O$ | 820 | 60 | 500 | 12 | 10 | 460 | 540 |
| 25 | T | 12 | 755 | 10 | 0.01 | mixed with '$H_2O$ | 840 | 60 | 500 | 12 | 20 | 460 | 520 |
| 26 | U | 12 | 720 | 10 | 0.01 | mixed with '$H_2O$ | 850 | 60 | 500 | 12 | 40 | 460 | 520 |
| 27 | V | 12 | 755 | 10 | 0.01 | mixed with '$H_2O$ | 850 | 60 | 500 | 12 | 30 | 460 | 520 |
| 28 | V | 12 | 760 | 10 | 0.01 | mixed with '$H_2O$ | 880 | 60 | 500 | 12 | 60 | 460 | 530 |
| 29 | W | 12 | 770 | 10 | 0.01 | mixed with '$H_2O$ | 820 | 60 | 500 | 12 | 50 | 460 | 520 |
| 30 | X | 12 | 775 | 10 | 0.01 | mixed with '$H_2O$ | 850 | 60 | 500 | 12 | 40 | 460 | 530 |

EP 2 224 033 B1

(continued)

| No. | Steel type | DFF | | | | | Annealing | | Cooling | | Time from cooling to plating | Steel sheet temperature dipped in plating bath | Alloying treatment temperature |
| | | Average temperature rising rate from 400°C~ DFF outlet side temperature (°C/s) | DFF outlet side temperature (°C) | Width-direction deviation of DFF outlet side temperature (°C) | CO/H$_2$O ratio in DFF furnace (volume ratio) | Gas composition control | Annealing temperature (°C) | Annealing time (s) | Cooling temperature (°C) | Cooling rate after annealing (°C/s) | (s) | (°C) | (°C) |
|---|---|---|---|---|---|---|---|---|---|---|---|---|---|
| 31 | X | 12 | 765 | 10 | 0.01 | mixed with 'H$_2$O | 880 | 60 | 500 | 12 | 10 | 460 | 530 |
| 32 | Y | 12 | 750 | 10 | 0.01 | mixed with 'H$_2$O | 830 | 60 | 500 | 12 | 20 | 480 | 520 |
| 33 | Z | 12 | 740 | 10 | 0.01 | mixed with 'H$_2$O | 840 | 60 | 500 | 12 | 40 | 460 | 520 |
| 34 | A | 12 | <u>580</u> | 10 | 0.01 | mixed with 'H$_2$O | 850 | 60 | 500 | 12 | 30 | 460 | 520 |
| 35 | A | 12 | 765 | 10 | 0.01 | mixed with 'H$_2$O | 850 | 60 | 500 | 12 | 20 | 460 | <u>610</u> |
| 36 | A | 12 | 765 | <u>25</u> | 0.05 | - | 850 | 60 | 500 | 12 | 40 | 480 | 520 |
| 37 | A | 12 | 765 | 10 | <u>0.0004</u> | mixed with 'H$_2$O | 850 | 60 | 500 | 12 | 10 | 460 | 450 |
| 38 | A | 12 | 765 | 10 | <u>1</u> | mixed with CO | 850 | 60 | 500 | 12 | 20 | 460 | 450 |

Note: Underline indicates outside the range of the present invention

Table 4

| No. | Steel sheet texture | | | | | Plating layer | | | | Mechanical Properties | | | | | Classification |
|---|---|---|---|---|---|---|---|---|---|---|---|---|---|---|---|
| | Vα (%) | VM (%) | HV α | Length of grain boundary (%) | Average length of oxides (μm) | Plating type | Plating amount (g/m$^2$) | Fe% | Plating properties | TS (Mpa) | EI (%) | λ (Mpa) | TS×EI (Mpa·%) | TS×λ (Mpa·%) | |
| 1 | 95.4 | 4.6 | 182.5 | 15 | 0.35 | GA | 48 | 9.5 | ○ | 602.0 | 31.3 | 108 | 18843 | 65016 | invention example |
| 2 | 95.1 | 4.9 | 179.8 | 12 | 0.42 | GI | 61 | - | ○ | 601.9 | 31.3 | 107 | 18839 | 64403 | Invention example |
| 3 | 91.0 | 9.0 | 157.4 | 15 | 0.29 | GI | 62 | - | ○ | 617.0 | 30.4 | 87 | 18757 | 53679 | Invention example |
| 4 | 91.7 | 8.3 | 155.2 | 13 | 0.42 | GA | 36 | 8.8 | ○ | 597.4 | 30.5 | 91 | 18221 | 54363 | Invention example |
| 5 | 94.0 | 6.0 | 161.5 | 22 | 0.18 | GA | 46 | 9.2 | ○ | 607.0 | 32.7 | 83 | 19849 | 50381 | Invention example |
| 6 | 93.5 | 6.2 | 171.8 | 13 | 0.16 | GA | 62 | 10.2 | ○ | 611.3 | 33.7 | 95 | 20601 | 58074 | Invention example |
| 7 | 92.4 | 7.0 | 172.4 | 16 | 0.18 | GI | 48 | - | ○ | 619.3 | 33.1 | 94 | 20499 | 58214 | Invention example |
| 8 | 94.7 | 5.3 | 178.3 | 9 | 0.29 | GA | 48 | 10.5 | ○ | 646.5 | 31.9 | 106 | 20623 | 68529 | Invention example |
| 9 | 93.5 | 6.5 | 179.1 | 23 | 0.29 | GA | 47 | 9.8 | ○ | 657.8 | 30.9 | 75 | 20326 | 49335 | Invention example |
| 10 | 93.0 | 7.0 | 181.0 | 23 | 0.20 | GA | 47 | 10.3 | ○ | 668.4 | 30.6 | 82 | 20453 | 54809 | Invention example |
| 11 | 91.0 | 7.0 | 148.0 | 48 | 0.45 | GA | 51 | 9.7 | ○ | 650.0 | 34.2 | 74 | 22230 | 48100 | Invention example |
| 12 | 90.5 | 7.5 | 148.5 | 36 | 0.27 | GA | 47 | 8.9 | ○ | 650.0 | 33.4 | 74 | 21710 | 48100 | Invention example |
| 13 | 90.2 | 8.2 | 145.1 | 35 | 0.32 | GA | 35 | 9.0 | ○ | 650.0 | 32.3 | 73 | 20995 | 47450 | Invention example |

EP 2 224 033 B1

(continued)

| No. | Steel sheet texture | | | | | Plating layer | | | Plating properties | Mechanical Properties | | | | | Classification |
|---|---|---|---|---|---|---|---|---|---|---|---|---|---|---|---|
| | Vα (%) | VM (%) | HVα | Length of grain boundary (%) | Average length of oxides (μm) | Plating type | Plating amount (g/m²) | Fe% | | TS (Mpa) | El (%) | λ (Mpa) | TS×El (Mpa·%) | TS×λ (Mpa·%) | |
| 14 | <u>89.0</u> | <u>10.0</u> | 165.1 | 45 | 0.33 | GA | 46 | 9.8 | ○ | 691.2 | 29.1 | 52 | 20114 | <u>35942</u> | Comparative example |
| 15 | 90.4 | 9.6 | 147.9 | 42 | 0.32 | GA | 46 | 9.5 | ○ | 670.0 | 29.5 | 71 | 19765 | 47570 | Invention example |
| 16 | 90.1 | 9.9 | 137.0 | 28 | 0.20 | GA | 48 | 9.7 | ○ | 670.0 | 28.0 | 71 | 18760 | 47570 | Invention example |
| 17 | <u>87.8</u> | <u>10.7</u> | 132.0 | 43 | 0.32 | GA | 46 | 9.8 | ○ | 621.0 | 29.4 | 48 | 18257 | <u>29808</u> | Comparative example |
| 18 | <u>86.2</u> | <u>11.7</u> | <u>118.5</u> | 11 | 0.09 | GA | 48 | 10.1 | × | 617.3 | 28.9 | 47 | 17840 | <u>29013</u> | Comparative example |
| 19 | <u>85.3</u> | <u>8.4</u> | 135.0 | 14 | 0.18 | GA | 47 | 10.3 | × | 591.0 | 26.4 | 45 | <u>15602</u> | <u>26595</u> | Comparative example |

Note: underline indicates outside the range of the present invention
Vα :Ferrite area ratio, VM:Non-tempered martensite area ratio, HVα :Ferrite hardness
Length of grain boundary:Length (%) of grain boundaries in which oxides are precipitated to the total length of grain boundaries in
region just under plating layer to a 3-μm depth of base iron surface layer
Average length of oxide:Average length along grain boundary of oxides precipitated in grain boundaries in region just under plating layer to a 3-μm depth of base iron surface layer

Table 5

| No. | Steel sheet texture | | | | | Plating layer | | | Plating properties | Mechanical Properties | | | | | Classification |
|---|---|---|---|---|---|---|---|---|---|---|---|---|---|---|---|
| | Vα (%) | VM (%) | HV α | Length of grain boundary (%) | Average length of oxides (μm) | Plating type | Plating amount (g/m²) | Fe% | | TS (Mpa) | El (%) | λ (Mpa) | TS×El (Mpa·%) | TS×λ (Mpa·%) | |
| 20 | 92.5 | 7.5 | 150.8 | 26 | 0.28 | GA | 61 | 9.2 | ○ | 602.0 | 32.1 | 81 | 19324 | 48762 | Invention example |
| 21 | 92.2 | 7.8 | 151.3 | <u>54</u> | 0.51 | GA | 48 | 10.2 | × | 632.8 | 30.2 | 64 | 19111 | <u>40499</u> | Comparative example |
| 22 | 93.2 | 6.8 | 164.3 | 29 | 0.12 | GA | 48 | 10.1 | ○ | 633.0 | 31.5 | 85 | 19940 | 53805 | Invention example |
| 23 | 91.7 | 8.3 | 149.2 | 24 | 0.27 | GA | 48 | 9.5 | ○ | 623.0 | 31.7 | 85 | 19749 | 52955 | Invention example |
| 24 | 92.0 | 8.0 | 162.0 | 23 | 0.18 | GA | 47 | 9.3 | ○ | 645.0 | 30.8 | 88 | 19866 | 56760 | Invention example |
| 25 | 92.7 | 7.3 | 162.5 | 28 | 0.21 | GA | 48 | 10.2 | ○ | 617.0 | 31.7 | 84 | 19559 | 51828 | Invention example |
| 26 | 91.2 | 8.8 | 149.3 | 25 | 0.28 | GA | 61 | 9.3 | ○ | 609.5 | 31.5 | 82 | 19199 | 49979 | Invention example |
| 27 | 93.2 | 6.8 | 181.2 | 21 | 0.19 | GA | 37 | 10.8 | ○ | 606.0 | 31.6 | 118 | 19150 | 71508 | Invention example |
| 28 | 93.8 | 6.2 | 182.2 | 23 | 0.21 | GA | 46 | 9.5 | ○ | 605.0 | 30.6 | 135 | 18513 | 81675 | Invention example |
| 29 | 91.2 | 8.8 | 156.9 | 11 | 0.18 | GA | 47 | 9.5 | ○ | 603.0 | 29.7 | 96 | 17909 | 57888 | Invention example |
| 30 | 90.2 | 9.8 | 159.3 | 8 | 0.09 | GA | 36 | 10.1 | ○ | 637.0 | 29.4 | 93 | 18728 | 59241 | Invention example |
| 31 | 90.9 | 9.1 | 157.5 | 19 | 0.12 | GA | 61 | 8.9 | ○ | 610.0 | 29.2 | 113 | 17812 | 68930 | Invention example |
| 32 | 93.7 | 6.3 | 160.5 | 25 | 0.22 | GA | 48 | 10.3 | ○ | 611.0 | 32.5 | 86 | 19858 | 52546 | Invention example |

| No. | Steel sheet texture | | | | | Plating layer | | | Plating properties | Mechanical Properties | | | | | Classification | |
|---|---|---|---|---|---|---|---|---|---|---|---|---|---|---|---|---|
| | Vα (%) | VM (%) | HVα | Length of grain boundary (%) | Average length of oxides (μm) | Plating type | Plating amount (g/m²) | Fe% | | TS (Mpa) | El (%) | λ (Mpa) | TS×El (Mpa·%) | TS×λ (Mpa·%) | | |
| 33 | 93.3 | 6.7 | 161.4 | 31 | 0.25 | GA | 46 | 9.5 | ○ | 627.0 | 31.5 | 87 | 19751 | 54549 | Invention example | |
| 34 | 95.4 | 4.6 | 182.5 | 15 | 0.35 | GA | 48 | <u>6.5</u> | × | 602.0 | 31.3 | 108 | 18843 | 65016 | Comparative example | |
| 35 | 95.4 | 4.6 | 182.5 | 15 | 0.35 | GA | 48 | <u>15.9</u> | × | 602.0 | 31.3 | 108 | 18843 | 65016 | Reference example | (Comparative example of Claim 5) |
| 36 | 95.4 | 4.6 | 182.5 | 15 | 0.35 | GA | 48 | 8.5 | ○ | 602.0 | 31.3 | 64 | 18843 | 38528 | Comparative example | |
| 37 | 95.4 | 4.6 | 182.5 | 15 | 0.35 | GA | 48 | <u>6.9</u> | × | 602.0 | 31.3 | 108 | 18843 | 65016 | Comparative example | |
| 38 | 95.4 | 4.6 | 182.5 | 15 | 0.35 | GA | 48 | <u>6.8</u> | × | 602.0 | 31.3 | 108 | 18843 | 65016 | Comparative example | |

Note: Underline indicates outside the range of the present invention
Vα : Ferrite area ratio, VM:Non-tempered martensite area ratio, HVα : Ferrite hardness
Length of grain boundary: Length (%) of grain boundaries in which oxides are precipitated to the total length of grain boundaries in region just under plating layer to a 3-μ m depth of base iron surface layer
Average length of oxide: Average length along grain boundary of oxides precipitated in grain boundaries in region just under plating layer to a 3-μm depth of base iron surface layer

Industrial Applicability

The present invention can provide a method for manufacturing a high strength hot-dip galvanized steel sheet having a tensile strength level of 590 MPa, which has superior coating properties and formability, and a method for manufacturing a high strength hot-dip galvannealed steel sheet. The methods of the present invention have an extremely important industrial utility value, are extremely effective, in particular, of decreasing the weight of automobile bodies and of preventing generation of rust, and have significant industrial advantages.

**Claims**

1.   A method for manufacturing a high strength hot-dip galvanized steel sheet comprising:

heating a steel sheet in a CGL having a DFF type heating zone in which a $CO/H_2O$ ratio (volume ratio) of an atmospheric gas composition in the heating zone is set in the range of 0.001 to 0.8, a width-direction temperature deviation at a steel sheet temperature of 700 °C or more is set to less than 20 °C at a heating zone outlet side, and an average temperature rising rate from 400 °C to a heating zone outlet side temperature in the heating zone is set to 10 °C/s or more, the steel sheet consisting of, on a mass percent basis, as chemical components,

0.005% to 0.12% of C,
0.7% to 1.8% of Si,
0.5% to 2.8% of Mn,
0.1% or less of P,
0.07% or less of S,
1.0% or less of Al,
0.008% or less of N,

optionally:

at least one element selected from the group consisting of 0.05% to 1.2% of Cr, 0.005% to 1.0% of V, and 0.005% to 0.5% of Mo and/or
at least one element selected from the group consisting of 0.01% to 0.1 % of Ti, 0.01% to 0.1% of Nb, 0.0003% to 0.0050% of B, 0.05% to 2.0% of Ni, and 0.05% to 2.0% of Cu and/or
at least one element selected from the group consisting of 0.001% to 0.005% of Ca and 0.001% to 0.005% of REM
and the balance being Fe and incidental impurities;
next, performing annealing in a temperature range of 700 to 940 °C for 15 to 600 seconds; subsequently, performing cooling to a temperature range of 440 to 550 °C at a cooling rate of 3 °C/s or more; and then dipping the steel sheet at a temperature of 440 to 550 °C into a hot-dip galvanizing bath at a temperature of 440 to 500 °C within 200 seconds after the cooling to perform hot-dip galvanizing.

2.   A method for manufacturing a high strength hot-dip galvannealed steel sheet according to Claim 1; wherein after performing hot-dip galvanizing the steel sheet is heated to 460 to 600 °C to perform galvannealing.

**Patentansprüche**

1.   Verfahren zur Herstellung eines hochfesten feuerverzinkten Stahlblechs, umfassend:

Erwärmen eines Stahlblechs in einer kontinuierlichen Feuerverzinkungslinie (CGL) mit einer Heizzone eines direkten Brennofens (DFF-Heizzone), in der ein CO / $H_2O$-Verhältnis (Volumenverhältnis) einer atmosphärischen Gaszusammensetzung in der Heizzone im Bereich von 0,001 bis 0,8 eingestellt ist, eine Breitenrichtungs-Temperaturabweichung bei einer Stahlblechtemperatur von 700 ° C oder mehr, weniger als 20 ° C an einer Heizzonenaustrittsseite ist, und eine mittlere Temperaturanstiegsrate in der Heizzone von 400 ° C zu einer Heizzonenaustrittsseitentemperatur auf 10 ° C/s oder mehr eingestellt ist, wobei das Stahlblech, auf Massebasis, aus folgenden chemische Komponenten besteht,

0,005% bis 0,12% C,

0,7% bis 1,8% Si,
0,5% bis 2,8% Mn,
0,1% oder weniger P,
0,07% oder weniger von S,
1,0% oder weniger Al,
0,008% oder weniger N,

wahlweise:

mindestens ein Element ausgewählt aus der Gruppe, bestehend aus 0,05% bis 1,2% Cr, 0,005% bis 1,0% V und 0,005% bis 0,5% Mo, und / oder

mindestens ein Element, ausgewählt aus der Gruppe, bestehend aus 0,01% bis 0,1% Ti, 0,01% bis 0,1% Nb, 0,0003% bis 0,0050% B, 0,05% bis 2,0% Ni und 0,05% bis 2,0% Cu, und / oder

mindestens ein Element ausgewählt aus der Gruppe bestehend aus 0,001 % bis 0,005% Ca und 0,001% bis 0,005% REM,

und als Rest aus Fe und zufälligen Verunreinigungen besteht;

anschließendes Durchführen eines Glühens in einem Temperaturbereich von 700 bis 940 °C für 15 bis 600 Sekunden;

anschließend Kühlen auf einen Temperaturbereich von 440 bis 550 °C mit einer Abkühlgeschwindigkeit von 3 °C / s oder mehr; und dann

Eintauchen des Stahlblechs bei einer Temperatur von 440 bis 550 °C in ein feuerverzinkendes Bad mit einer Temperatur von 440 bis 500 °C innerhalb von 200 Sekunden nach dem Abkühlen, um eine Feuerverzinkung durchzuführen.

**2.** Verfahren nach Anspruch 1, wobei das Stahlblech nach der Feuerverzinkung auf 460 bis 600 °C erhitzt wird, um das Wärmebehandeln nach dem Verzinken (Galvannealing) zu bewirken.


**Revendications**

**1.** Procédé de fabrication d'une tôle d'acier de haute résistance galvanisée par immersion à chaud comprenant : le chauffage d'une tôle d'acier dans un CGL présentant une zone de chauffage type DFF dans laquelle un rapport de $CO/H_2O$ (rapport en volume) d'une composition de gaz atmosphérique dans la zone de chauffage est paramétré dans la plage de 0,001 à 0,8, un écart de température dans le sens de la largeur à une température de la tôle d'acier de 700°C ou plus est paramétré à moins de 20°C au niveau d'un côté orifice de sortie de la zone de chauffage, et un taux d'élévation de la température moyenne de 400°C à une température côté orifice de sortie de la zone de chauffage dans la zone de chauffage est paramétré à 10°C/s ou plus, la tôle d'acier étant constituée, sur une base de pourcentage en masse, comme composants chimiques,

de 0,005 % à 0,12 % de C,
de 0,7 % à 1,8 % de Si,
de 0,5 % à 2,8 % de Mn,
0,1 % ou moins de P,
0,07 % ou moins de S,
1,0 % ou moins d'Al,
0,008 % ou moins de N,
éventuellement :

au moins un élément sélectionné dans le groupe constitué de 0,05 % à 1,2 % de Cr, de 0,005 % à 1,0 % de V, et de 0,005 % à 0,5 % de Mo et/ou

au moins un élément sélectionné dans le groupe constitué de 0,01 % à 0,1 % de Ti, de 0,01 % à 0,1 % de Nb, de 0,0003 % à 0,0050 % de B, de 0,05 % à 2,0 % de Ni, et de 0,05 % à 2,0 % de Cu et/ou

au moins un élément sélectionné dans le groupe constitué de 0,001 % à 0,005 % de Ca et de 0,001 % à 0,005 % de REM

et le reste étant du Fe et des impuretés accidentelles ;

ensuite, l'exécution de l'hybridation dans une plage de températures de 700 à 940°C durant 15 à 600 secondes ; par la suite, l'exécution du refroidissement à une plage de températures de 440 à 550°C à un taux de refroidissement de 3°C/s ou plus ; et ensuite l'immersion de la tôle d'acier à une température de 440 à 550°C dans un bain de galvanisation par immersion à chaud à une température de 440 à 500°C en 200 secondes après le refroidissement pour exécuter la galvanisation par immersion à chaud.

2. Procédé de fabrication d'une tôle d'acier de haute résistance recuite après galvanisation par immersion à chaud selon la revendication 1 ; dans lequel après l'exécution de la galvanisation par immersion à chaud la tôle d'acier est chauffée à 460 à 600°C pour exécuter le recuit après galvanisation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1853389 A
- JP 2003505604 PCT
- JP 3610883 B
- JP 11061327 A
- JP 10060593 A
- JP 7011383 A
- JP 3527092 B
- JP 2003213369 A
- JP 2003213370 A
- JP 2862186 B

- JP 2862187 B
- JP 2761095 B
- JP 2861096 B
- JP 6093340 A
- JP 6108152 A
- JP 2004115843 A
- JP 2002047535 A
- JP 2001288550 A
- JP 3459500 B
- WO 2007066600 A1